# EUROPEAN PATENT APPLICATION

(11) **EP 2 947 631 A1**
(43) Date of publication of application: **25.11.2015**
(21) Application number: 15172109.9
(22) Date of filing: 10.04.2007
(51) Int. Cl.: G07C 5/08, B60Q 5/00, B60W 50/08

(54) **A METHOD AND A SYSTEM FOR PROVIDING FEEDBACK TO A VEHICLE OPERATOR**

(62) Divisional of application: 07748004.4
(71) Applicant: Volvo Construction Equipment AB, 631 85 Eskilstuna (SE)
(72) Inventor: Filla, Reno, 632 20 Eskilstuna (SE)
(74) Representative: Volvo Technology Corporation

(57) **Abstract**

A method for providing feedback to a vehicle operator regarding an operational state of a vehicle power transmission system in operation, comprising the steps of detecting at least one operational parameter indicative of said operational state, and providing an audio feedback signal to the operator in response to a magnitude of the detected operational parameter, wherein the operational state is indicative of a load on a vehicle hydraulic system (214).

## Description

### TECHNICAL FIELD AND BACKGROUND ART

The present invention relates to a method and a system for providing feedback to a vehicle operator. The invention may be used for any vehicle type, such as a car, truck or bus, but it is particularly directed for application in an off-road vehicle, such as a work machine.

The term "work machine" comprises different types of material handling vehicles like construction machines, such as a wheel loader, a backhoe loader and an articulated hauler. A work machine is provided with a bucket or other type of work implement for carrying/transporting a load. Further terms frequently used for work machines are "earth-moving machinery", "off-road work machines", and "construction equipment". The invention will be described below in a case in which it is applied in a frame-steered work machine constituting a wheel loader. This is to be regarded only as an example of a preferred application.

In connection with transportation of heavy loads, e.g. in contracting work, work machines are frequently used. A work machine may be operated with large and heavy loads in areas where there are no roads, for example for transports in connection with road or tunnel building, sand pits, mines and similar environments.

The wheel loader comprises a powertrain for propelling the machine via the wheels. A power source, such as an internal combustion engine, and especially a diesel engine, is adapted to provide the power for propelling the wheel loader. The wheel loader further comprises a hydraulic system for performing certain work functions, such as lifting and tilting a work implement and steering the machine. The power source is also adapted to provide the power for controlling the hydraulic work functions. More specifically, one or more hydraulic pumps are driven by the power source in order to provide hydraulic actuators (such as hydraulic cylinders) with pressurized hydraulic fluid.

During operation, an operator receives a number of natural feedback references, such as a visual feedback, mainly from the operation of the work implement, a direct audio feedback, mainly from the engine but also from the hydraulic system, and a direct tactile feedback from jerks via the seat and/or operator controls. The operator responsively controls the further operation of the machine in response to the different natural feedback references.

The operation of the wheel loader is to a great extent performed via visual feedback, such as during a filling operation of the bucket and during performing the work cycle. The operator gets additional operation information from the jerks and changes in the sound pattern, wherein the operator can interpret the hydraulic pressure, engine speed, wheel spin, bucket contact with the material etc. For example, the operator can draw conclusions from whether the bucket is stuck in the material from the sound of the hydraulic pump. However, it requires an experienced operator to interpret such feedback signals correctly. Thus, unexperienced operators may not be able to correctly interpret the conventional direct feedback signals, which lead to less efficient operation/productivity.

Further, the operator is often exposed to a great deal of externally (and internally) generated noise preventing the operator from hearing the desired direct audio feedback signals. For example, noise from operation of other work machines may impair the direct audio feedback of the operator's own machine. Further, a single sound source such as the engine may be so loud that it is difficult or impossible to hear other important components in the powertrain or hydraulic system.

Further, increasing demands on the operator comfort may result in that the direct audio feedback and the direct tactile feedback will be less evident or even disappear due to measures of insulating and dampening the operator compartment.

Further, new types of power transmission systems, such as hybrid systems, change the conventional feedback signals to the operator. Especially, the engine speed and torque are no more directly related to the speed and traction force of the machine. Similar problems relate to the operation of the hydraulic system.

### SUMMARY OF THE INVENTION

An overall object of the invention is to increase productivity. The object may be seen in solving or at least facilitating at least one of the problems defined above. Especially, the invention aims for a method that creates conditions for a sufficient feedback to the operator of important operational states, such as traction force and/or hydraulic pressure during operation of a work machine.

This object is achieved in the method disclosed in claim 1. Thus, it is achieved by a method for providing feedback to a vehicle operator regarding an operational state of a power transmission system in the vehicle in operation, comprising the steps of detecting at least one operational parameter indicative of said operational state, and providing an audio feedback signal to the operator in response to a magnitude of the detected operational parameter.

The power transmission system comprises a powertrain (driveline) for propelling the vehicle and/or any other power providing system (such as a hydraulic system) for performing certain work functions. Thus, the power transmission system comprises the complete power transmission path from (and including) the power source to the ground engaging members (such as wheels) and/or the complete power transmission path from the power source to the work implement contacting the material/ground.

This method creates conditions for improving the working conditions for the operator while not visually distracting him from the current work (which may be the case with additional visual indications in the vehicle instrument panel). Especially, a detected operational state may be indicative of a situation that is difficult or not possible to visualize from the operator's position. Further, the method creates conditions for presenting more feedback signals from different operational states and/or components to the operator. Preferably, the audio signal is an automated, fictitious feedback signal (differing from a direct, authentic signal). Further, the invention creates conditions for providing the operator with an intuitively understood/interpreted feedback signal.

Thus, the current operational state is important for the future operation of the vehicle and the audio signal is a direct feedback of the current operational state. In other words, the audio signal is indicative of valuable current operational characteristics for the operator, who can act responsively in a fast and efficient manner. The operational parameter is preferably continuously (repeatedly) detected and audio signals are responsively produced.

Further, in the case of a work machine with a hybrid powertrain, the sound of the diesel engine is no longer indicative of the total performance of the work machine (traction force and speed). The inventive method creates conditions for correcting an incorrect audio feedback by means of a generated audio signal. For example, it may be achieved in that an audio signal is generated representative of a traction force (or torque) provided by an electric machine.

According to a preferred embodiment, the audio signal is synthetic. Thus, the audio signal is not an authentic sound from the currently operated power transmission system but instead generated in a control unit (computer) in the vehicle. The synthetic audio signal is preferably characteristic of the operational state in question. Thus, different sounds may be used to characterize different operational states. For example, a specific sound may be used for each individual operational state. Further, each individual operational state may be indicative of the operation of a specific component or system.

According to a further development of the last-mentioned embodiment, the synthetic audio signal is an imitation of the operational state in question. For example, the audio signal may be an imitation of the current sound of the power source. More specifically, the audio signal may be a simulated diesel engine sound.

According to an alternative, the synthetic audio signal is a pre-recorded sound of the operational state in question. For example, the sound of the power source may be pre-recorded and presented to the driver in an altered way in the current situation.

According to a further preferred embodiment, the method comprises the step of varying the audio signal in response to the detected variations in the magnitude of the operational parameter. Preferably, an amplitude and/or frequency of the audio signal may be varied accordingly. Thus, the audio signal is frequency modulated and/or amplitude modulated.

According to a further preferred embodiment, the operational state is indicative of a load on a vehicle powertrain.

According to an alternative or complementary embodiment, the operational state is indicative of a load on a vehicle hydraulic system.

More specifically, the inventive method is particularly directed to a work vehicle comprising both a powertrain for propelling the machine and a hydraulic system for performing certain work functions.

Other advantageous embodiments of the invention and its associated advantages are apparent from the other patent claims and from the following description.

### BRIEF DESCRIPTION OF DRAWINGS

The invention will be described in greater detail in the following, with reference to the embodiments shown in the attached drawings, in which
- FIG 1: shows a wheel loader in a side view,
- FIG 2: schematically shows a first exemplary embodiment of a powertrain, a hydraulic system and a system for providing feedback to a wheel loader operator,
- FIG 3: schematically shows a second exemplary embodiment of a powertrain and a hydraulic system of the wheel loader,
- FIG 4: is a schematic illustration of a system for providing feedback to a wheel loader operator in accordance with the powertrain and hydraulic system of fig 3,
- FIG 5: is a general flow chart for a method for providing feedback to a wheel loader operator,
- FIG 6: is a gas pedal map according to one example,
- FIG 7: shows a relationship between engine sound and engine speed according to one example,
- FIG 8: shows a relationship with regard to sound between speed and torque of an electric machine and a diesel engine according to one example,
- FIG 9: shows sound as a function of an imaginary engine speed and imaginary engine torque according to one example,
- FIG 10: is a turbine performance map according to one example, and
- FIG 11: is an engine speed versus torque graph according to one example.

### DETAILED DESCRIPTION OF THE INVENTION

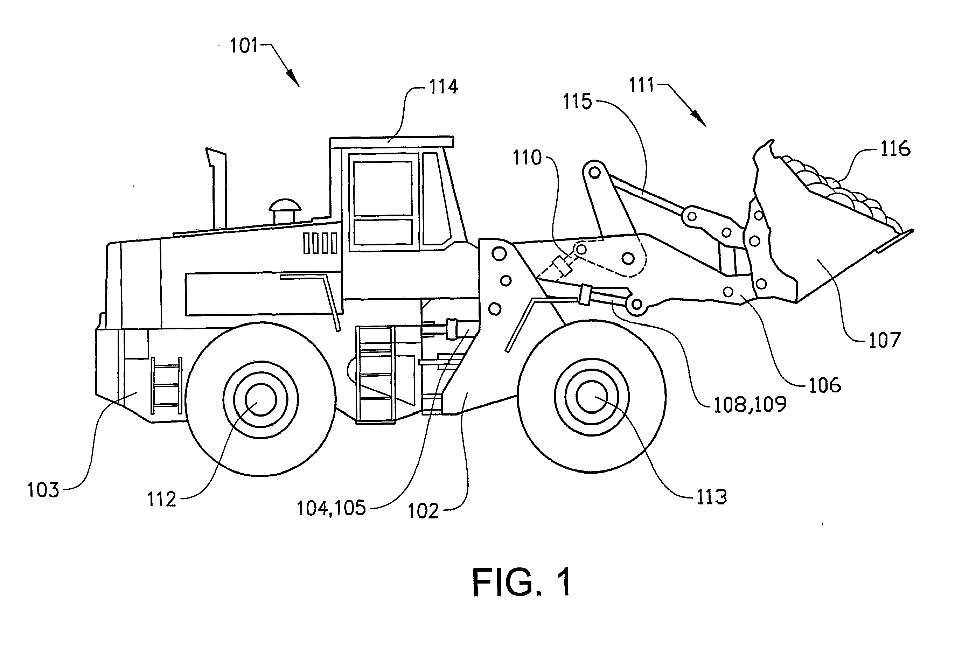

Figure 1 shows a wheel loader 101. The body of the wheel loader 101 comprises a front body section 102 with a front frame, and a rear body section 103 with a rear frame, which sections each has an axle 112,113 for driving a pair of wheels. The rear body section 103 comprises a cab 114. The body sections 102,103 are connected to each other via an articulation joint in such a way that they can pivot in relation to each other around a vertical axis. The pivoting motion is achieved by means of a pair of first actuators in the form of hydraulic cylinders 104,105 arranged between the two sections 102,103. Thus, the wheel loader is an articulated work vehicle. The hydraulic cylinders 104,105 are thus arranged one on each side of a horizontal centerline of the vehicle in a vehicle traveling direction in order to turn the wheel loader 101.

The wheel loader 101 comprises an equipment 111 for handling objects or material. The equipment 111 comprises a load-arm unit 106 and a work implement 107 in the form of a bucket fitted on the load-arm unit. It is self-evident that other work implements than a bucket may be used, such as forks or gripping arms. A first end of the load-arm unit 106 is pivotally connected to the front vehicle section 102. The implement 107 is pivotally connected to a second end of the load-arm unit 106.

The load-arm unit 106 can be raised and lowered relative to the front section 102 of the vehicle by means of two second actuators in the form of two hydraulic cylinders 108,109, each of which is connected at one end to the front vehicle section 102 and at the other end to the load-arm unit 106. The bucket 107 can be tilted relative to the load-arm unit 106 by means of a third actuator in the form of a hydraulic cylinder 110, which is connected at one end to the front vehicle section 102 and at the other end to the bucket 107 via a link-arm system 115.

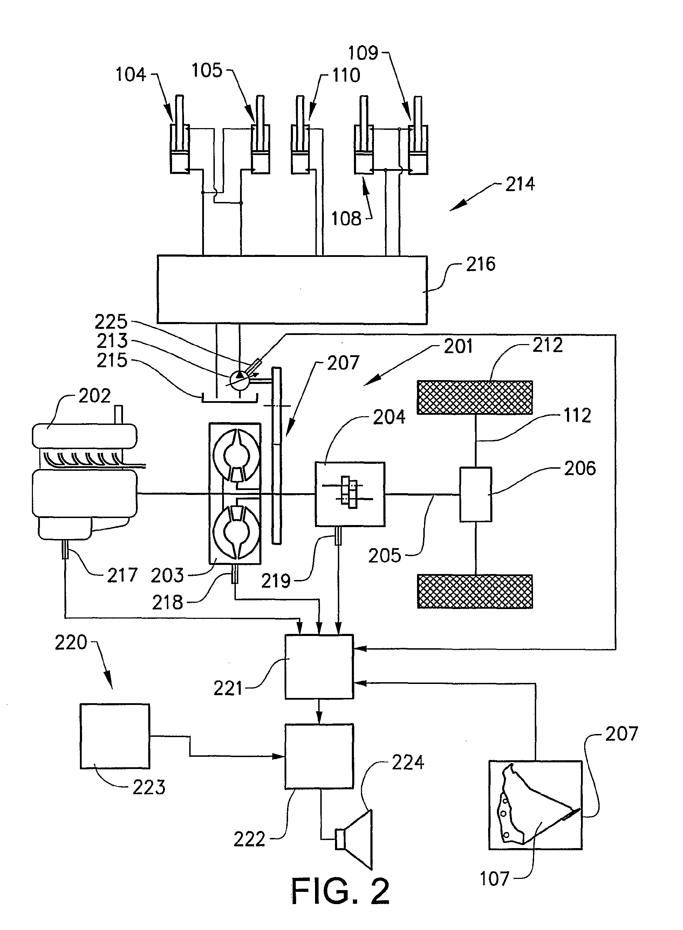

Figure 2 schematically shows a first embodiment of a powertrain 201 and a hydraulic system 214. The powertrain 201 comprises a power source 202 (prime mover) in the form of an internal combustion engine and a transmission for transmitting power from the engine 202 to the wheels 212 for propelling the wheel loader. The engine 202 is preferably a diesel engine. The powertrain 201 is of a mechanical type and comprises from the engine 202 to the wheels 212 the following: a transmsission unit 203, in the form of a torque converter, a gearbox 204, a propeller shaft 205, a differential gear 206 and transverse shafts 112. The gearbox is adapted for varying the speed of the vehicle, and for changing between forward and backward driving direction of the wheel loader 101.

The torque converter 203 is able to increase the torque, which means that the output torque of the torque converter can be for example in the interval 1-3 times the torque of the internal combustion engine 202. Furthermore, the torque converter has preferably a free wheel function and a lock-up function for direct operation without any increased torque. Thus, the transmission ratio of the torque converter in the lock-up state is fixed, and preferably substantially 1:1. However, in an alternative embodiment the transmission unit 203 could be an ordinary clutch for disengagement or direct operation without any increased torque. Such a clutch could be a hydraulic clutch as well as a mechanical clutch.

The engine 202 is adapted to provide a motive power for propelling the vehicle and to operatively drive at least one variable displacement pump 213 in the hydraulic system 214 for lifting operations and steering the wheel loader 101. The hydraulic pump 213 is driven by the internal combustion engine 202, preferably via gear wheels arranged between the torque converter 203 and the gearbox 204.

The pump 213 is configured for delivering pressurized hydraulic fluid from a tank 215 to the cylinders 104,105,108,109,110. A number of electronically controlled valve units are hydraulically connected between the pump 213 and the cylinders 104,105,108, 109,110 for regulating the reciprocating work of the cylinders. The system of hydraulic valve units is, for ease of presentation, represented by a single box 216.

Further, figure 2 schematically shows a system 220 for providing feedback to an operator during operation of the wheel loader 101. The system 220 comprises means 217,218,219,225 for detecting at least one operational parameter indicative of an operational state of the wheel loader. The system 220 further comprises means 221,222,223,224 for providing an audio feedback signal to the operator in response to a magnitude of the detected operational parameter.

More specifically, the system 220 comprises means 221 for receiving and processing the detected operational parameters. The processing means 221 is formed by a control unit, or computer. Further, the system 220 comprises a base sound generating means 223, which is operatively connected to a sound synthesizer 222. The sound synthesizer 222 receives information from the processing means 221 and from the base sound generating means 223. Further, the system 220 comprises means 224 for introducing the audio signal into an operator compartment of the vehicle. Said means 224 may be formed by a loudspeaker or headphones.

The system is adapted to generate an audio sound input to the operator for conveying information regarding an operational state of the vehicle. More specifically, the audio signal is of such type that the operator easily understands the operational state and can control the vehicle accordingly.

At least one of said operational parameter detection means 217,218,219 is indicative of a load on the vehicle powertrain 301. More specifically, one of said operational parameter detection means 217 is indicative of a load on the diesel engine 202. Further, at least one of said operational parameter detection means 225 is indicative of a load on the vehicle hydraulic system 214, here represented by the hydraulic pump 215.

Further, at least one of said operational parameter detection means 207 is indicative of a state of the work implement 107, preferably a position of the work implement. The feedback system may comprise further detection means for detecting an operational state of the hydraulic system, such as pressure sensors and/or position sensors at the cylinders.

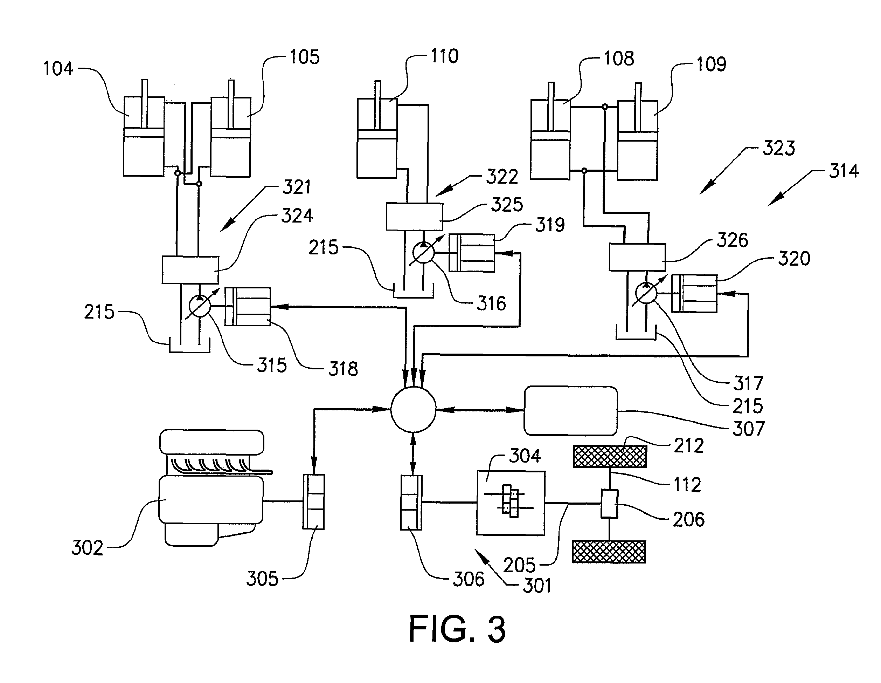

Figure 3 schematically shows a second embodiment of a powertrain 301 and a hydraulic system 314. Like in the first embodiment, the powertrain 301 comprises a diesel engine 302, a gear box 304 and transverse shafts 112.

The powertrain 301 is a series hybrid powertrain. The powertrain 301 differs from the first embodiment in that the powertrain 301 comprises two electric machine 305,306 for driving and braking the driving wheels, and/or for powering at least one hydraulic pump 315,316,317 in the hydraulic system 314 by electricity.

A first electric machine 305 is connected to an output shaft of the internal combustion engine 302 and functions as a generator. A second electric machine 306 is connected to the wheels and functions as a motor. In this example, the second electric machine 306 is connected to an input shaft of the gear box 304. The electric machines 305,306 are electrically connected to each other for transmitting torque from the internal combustion engine 302 to the driving wheels via the first and second electric machines 305,306.

In this example, one hydraulic pump is arranged for each implement and/or steering function. Thus, the hydraulic system 314 comprises three hydraulic pumps 315,316,317; a first hydraulic pump 317 is arranged to provide a lifting and lowering function of the implement, a second hydraulic pump 316 is arranged to provide a tilting function of the implement, and a third hydraulic pump 315 is arranged to provide the steering function of the working machine. By separate hydraulic pumps for these functions the operation of the working machine can be further optimized and thus the total energy consumption can be lowered.

Each hydraulic pump 315,316,317 is provided with an electric machine 318,319,320. The electric machines 305,306 in the powertrain 301 are electrically connected to the electric machines 318,319,320 in the hydraulic system. The electric machines 305,306 in the powertrain can be connected directly to the electric machines 318,319,320 in the hydraulic system as well as connected to an electric energy storage means 307, such as a battery or a super capacitor, which in turn is connected to the electric machines 318,319,320. The working machine 1 preferably comprises such an electric energy storage means 307 for storing energy and providing energy to the electric machines 305,306,318,319,320. Furthermore, conventional control units (not shown) can be used to control the energy transfer in different parts of the system illustrated in figure 3.

Each hydraulic pump 315,316,317 is provided in a separate hydraulic circuit 321,322,323 for each work function. A number of electronically controlled valve units may be hydraulically connected between each pump 315,316,317 and the cylinders 104,105,108,109,110 for regulating the reciprocating work of the cylinders. Each of the systems of hydraulic valve units is, for ease of presentation, represented by a single box 324,325,326.

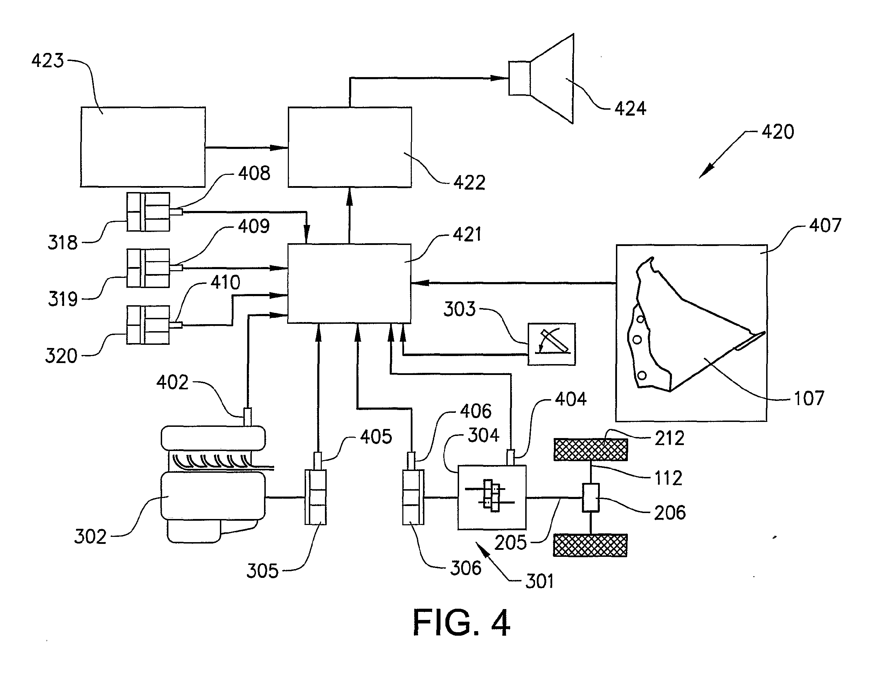

Figure 4 is a schematic illustration of a second embodiment of a system 420 for providing feedback to an operator during operation of the wheel loader 101. The system 220 comprises means 402,404,405,406,407,408, 409,410 for detecting at least one operational parameter indicative of an operational state of the wheel loader. In addition to the already described detection means in connection with figure 2, further detection means are provided for detection of a operational parameter indicative of a load of at least one of the electric machines 305,306 in the powertrain and the electric machines 318,319,320 in the hydraulic system.

The system 420 comprises means 421,422,423,424 for providing an audio feedback signal to the operator in response to a magnitude of the detected operational parameter. Said audio feedback signal means 421,422,423,424 are similar to the already described audio feedback signal means 221,222,223,224 in figure 2.

The control unit 421 further receives information concerning the required work machine velocity or traction force from a sensor 303, which detects the position of an accelerator control means (such as a throttle pedal or gas pedal) and generates a signal with information about the position of the throttle pedal to the control unit 421.

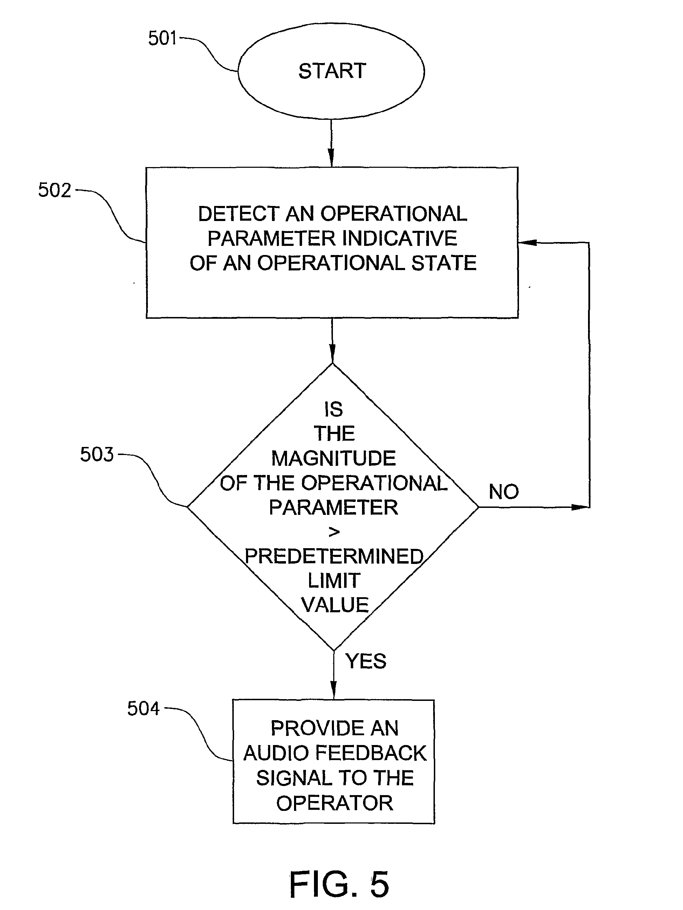

Fig. 5 is a general flow chart for performing the method. The chart starts in block 501. In general terms, the method is adapted for detecting an operational parameter indicative of a predetermined operational state 502. The method further comprises evaluating/comparing a magnitude of the detected operational parameter with a preset value or set of values 503 and determining if an audio signal should be generated. The method further comprises selecting a sound representative of the operational state in question and responsively producing the audio signal to the operator 504.

A first embodiment of a method for providing feedback to a vehicle operator will now be described for the hybrid serial powertrain (see figure 3).

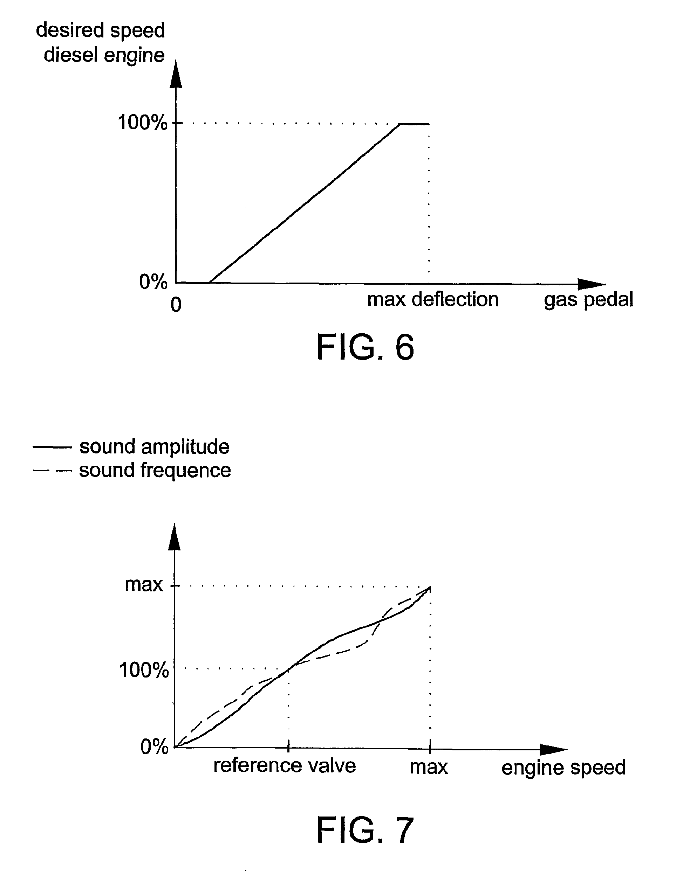

In a conventional wheel loader powertrain, (see for example figure 2 and 6), the gas pedal position directly controls the combustion engine speed. There may be a linear relationship between the gas pedal deflection and the engine speed. The combustion engine emits a characteristic sound pattern depending on torque and speed (see figure 7).

In contrast to such a conventional powertrain, the gas pedal position controls a hybrid work machine velocity or traction force. The electric machine 306 connected to the wheels receives the required power from the energy storage means 307 and/or the power generating electric machine 305, which is driven by the engine 302, and supplies the power to the wheels.

One problem of a hybrid work machine is that the diesel engine speed does not follow the angle of the gas pedal, which deprives the operator of his normal natural sound feedback.

This method is aimed at generating an audio signal to the driver of said hybrid powertrain, which audio signal is similar to the authentic engine sound feedback in the conventional powertrain based on gas pedal position.

Thus, the method comprises the steps of sensing the position of the throttle pedal 303, processing the information in the processing means 221 via a first predetermined map, see figure 6, which results in an imaginary desired engine speed. The imaginary desired engine speed is processed in a second predetermined map, see figure 7, which results in an imaginary engine sound pattern, which is delivered to the sound syntheziser 422.

The base sound generating means 223 provides the sound syntheziser 422 with a base sound, which may be a prerecorded sound of the combustion engine at a normal engine speed, see for example the engine speed reference value in figure 7.

The sound syntheziser 422 creates an imaginary engine speed sound by altering the base sound with regard to amplitude and/or frequency. This step may be referred to as "pitch shifting". The generated imaginary engine speed sound is then introduced into an operator compartment of the vehicle via said speaker 424. Thus, the output audio signal is synthetic.

The audio signal is preferably immediately provided to the operator in response to the deflection of the gas pedal.

According to an alternative to using a pre-recorded sound, the synthetic audio signal is an imitation of a sound of the operational state in question.

In contrast to the example above with a wheel loader, in a conventional articulated hauler, the gas pedal position may control engine torque and thereby the traction force instead of the engine speed. In this case, the linear mapping of the gas pedal position to desired engine speed is replaced by a calculation, in which the gas pedal position is mapped to a desired torque as a function of actual speed.

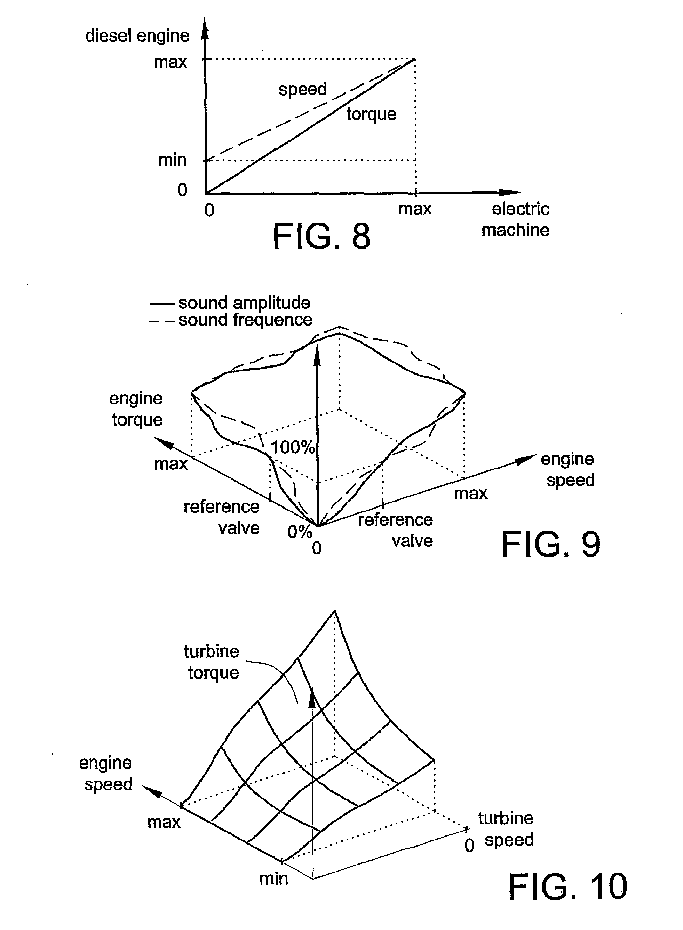

A second embodiment of a method for providing feedback to a vehicle operator will now be described for the hybrid serial powertrain with reference to figure 8 and 9.

In a conventional wheel loader powertrain, (see for example figure 2), the sound pattern of the engine changes in response to loads. Thus, the engine sound pattern is not only depending on the engine speed, but also the engine torque.

In contrast to such a conventional powertrain, the engine torque is disconnected from the traction force in the serial hybrid powertrain.

The method comprises the steps of measuring a speed and torque of the electric machine 306 functioning as a motor and generating the audio signal responsively. More specifically, the speed and torque of the electric machine 306 is converted to an imaginary speed and an imaginary torque of an engine, see figure 8. A simple linear relationship is used for both the speed and torque.

Figure 9 discloses an imaginary diesel engine sound pattern on the basis of the imaginary engine speed and imaginary engine torque. The imaginary diesel engine sound pattern is delivered from the processing means to the sound synthesizer. The base sound is a pre-recorded engine sound, see the reference values in figure 9 (100%), provided by the base sound generating means to the sound synthesizer. The audio signal is generated in a similar manner as has been described above for the first embodiment.

According to an alternative to using a pre-recorded engine base sound, only a part of the authentic engine sound may be used. For example, there are different sound sources in a diesel engine such as the noisy exhaust sound, the sound of the cog interactions in the transmission and the turbocharger sound. According to one example, only the more pleasant exhaust sound may be used in the method. Thus, the base sound only comprises the exhaust sound component and the other components are filtered away.

A third embodiment of a method for providing feedback to a vehicle operator will now be described for the conventional powertrain with reference to figure 2.

The operator gets automatic feedback of the engine sound in that the sound pattern changes depending on engine speed and engine torque. However, the operator is normally more interested in work machine velocity and traction force. The velocity is directly registered by the driver. However, the traction force is more difficult to interpret directly. The traction force is indirectly a function of the engine speed an, but with due regard to work machine velocity and current gear position.

The method comprises the steps of detecting the engine speed, the turbine wheel speed of the torque converter and the current gear position. Figure 10 shows a graph of the turbine torque depending on engine speed and turbine wheel speed. According to the graph, maximum turbine torque is achieved at the highest engine speed and the lowest turbine speed (thus, the wheel loader is at a standstill).

A theoretic traction force is calculated based on the turbine torque and with the knowledge of the currently applied gear, all gearings in the powertrain and the wheel radius. The magnitude of the theoretic traction force value is indicative of where the wheel loader is operated between a zero traction force and a maximum traction force. It may be sufficient to multiply the turbine torque value with the current gearing for a sort of normalized traction force value.

A sound wave, such as a simple sinusoidal wave may be used as a base sound. The sound synthesizer modifies the simple sinusoidal base sound, for example via frequency modulation synthesis, as a function of the normalized traction force value. Frequency modulation synthesis (or FM synthesis) is a form of audio synthesis where the timbre of a simple waveform is changed by frequency modulating it with a modulating frequency that is also in the audio range, resulting in a more complex waveform and a different-sounding tone. For example, the frequency is reduced when the normalized traction force value increases.

A fourth embodiment of a method for providing feedback to a vehicle operator will now be described for the conventional powertrain with reference to figure 2. More specifically, the feedback audio signal represents a load margin of the diesel engine.

The engine torque depends on the engine speed in a diesel engine. An engine control system only allows a certain engine torque at a specific engine speed. The closer an engine operation point is to this maximum curve, the higher is the risk of a load increase that extends outside this maximum curve, which would lead to retardation, i.e the diesel engine speed is decreased either to a speed where it can generate enough torque to counteract the load or until it abruptly stops (which is normally undesirable). It may be interesting for the driver to know how close the engine operates relative to this limit. With such knowledge, the engine speed can be raised as a preventive measure.

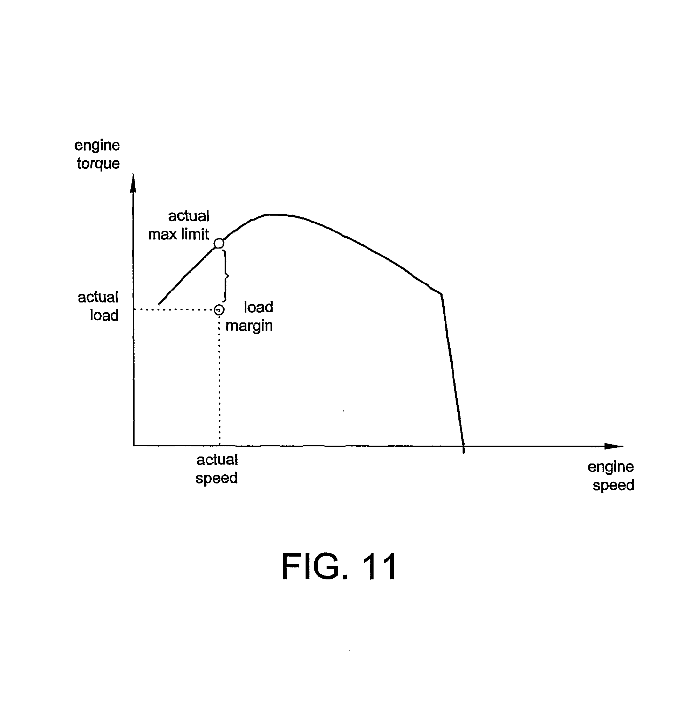

The method comprises the steps of detecting the engine speed and measuring or in other way acquiring (by estimation/calculation) a torque value. The engine maximum torque curve is shown in figure 11 depending on engine speed. A load margin is calculated as the difference between the actual torque limit (defined by the torque curve) at a specific engine speed and the actual torque.

Similar to the method according to the third embodiment, a simple sound is generated, and the sound synthesizer is adapted to modify the base sound depending on how close the current torque is to the maximum torque. For example, the frequency of the audio sound is increased the closer to the maximum curve the engine is operated, thereby creating an alarm-like sound.

According to an alternative, the operational state is indicative of the extent of current power source torque relative to a maximum available power source torque at the current power source speed. According to a further alternative, the operational state is indicative of the extent of current power source torque relative to a totally maximum power source torque.

Further, detected operational states comprising the combination of vertical position of the implement and a high speed of the vehicle is indicative of a risk for an instability condition. More specifically, a high implement position and a high speed simultaneously is an indication of a substantial risk for for the wheel loader to tip over. The feedback system may be adapted to generate a signal in response to the risk for instability. The control unit 216 is therefore further connected to a vehicle speed detection means 220 in the powertrain 201 for receiving a signal indicative of vehicle speed.

The control unit 216 is commonly known as a central processing unit (CPU) or an electronic control module (ECM) for an electronic control of the vehicle operation. In a preferred embodiment, the control unit is a microprocessor. The control unit 216 comprises a memory, which in turn comprises a computer program with computer program segments, or a program code, for implementing the control method when the program is run. This computer program can be transmitted to the control unit in various ways via a transmission signal, for example by downloading from another computer, via wire and/or wirelessly, or by installation in a memory circuit. In particular, the transmission signal can be transmitted via the Internet.

The invention is not to be considered to be limited to the embodiments described above, a number of additional variants and modifications being possible within the framework of the following patents claims.

The power source (prime mover) may not necessarily be an internal combustion engine, in the form of a diesel engine. Instead also other power sources, such as gasoline operated internal combustion engines, electric motors, alternative fuel prime movers and fuel cells may be used.

According to a further alternative, different detected operational parameters are of varying importance and it is therefore determined which sound or sounds should have priority. In other words, it is determined which sounds should be masked by others. Two competing sounds may be close in frequency and difficult to distinguish from each other.

According to an alternative, the invention is not limited to the series hybrid powertrain disclosed in figure 3-4, but it may be applied in other types of hybrid powertrains, such as in a parallel hybrid powertrain. Referring to figure 3, a parallel hybrid powertrain is achieved by adding a mechanical transmission path from the engine 302 to the wheels. For example, a transmission unit may be applied between the two electric machines 305,306 and thereby establishing a mechanical transmission path between the engine 302 and the gearbox 304. The transmission unit may be constituted by a mechanical clutch, but may also be constituted by a hydrodynamic clutch in the form of a hydrodynamic torque converter.

According to an alternative embodiment, the operational state is indicative of a currently performed work function, which is at least partly performed via a hydraulic system. The operational state is indicative of a load on a vehicle hydraulic system. In a similar manner as has been described above with regard to engine speed and torque, the operational state is indicative of the current pump pressure and pump flow or displacement. For example, the operational state is indicative of the extent of current pump pressure relative to a maximum available pump pressure at the current power source speed. According to an alternative, the operational state is indicative of the extent of current pump pressure relative to a totally maximum pump pressure.

It should be noted that embodiments of the present invention may be defined in accordance with any one of the points listed hereinbelow.
Point 1. A method for providing feedback to a vehicle operator regarding an operational state of a vehicle power transmission system in operation, comprising the steps of detecting at least one operational parameter indicative of said operational state, and providing an audio feedback signal to the operator in response to a magnitude of the detected operational parameter.
Point 2. A method according to point 1, wherein the audio signal is synthetic.
Point 3. A method according to point 2, wherein the synthetic audio signal is characteristic of the operational state in question.
Point 4. A method according to point 2, wherein the synthetic audio signal is an imitation of an authentic sound of the operational state in question.
Point 5. A method according to point 2, wherein the synthetic audio signal is a pre-recorded sound of the operational state in question.
Point 6. A method according to any preceding point, comprising the step of varying the audio signal in response to any detected variations in the magnitude of the operational parameter.
Point 7. A method according to any preceding point, comprising the step of varying an amplitude of the audio signal.
Point 8. A method according to any preceding point, comprising the step of varying a frequency of the audio signal.
Point 9. A method according to any preceding point, comprising the step of introducing the audio signal into an operator compartment of the vehicle.
Point 10. A method according to any preceding point, wherein the operational state is indicative of a currently performed work function.
Point 11. A method according to point 10, wherein the work function is at least partly performed via a hydraulic system.
Point 12. A method according to any preceding point, comprising the step of detecting a position of an accelerator control means.
Point 13. A method according to any preceding point, wherein the operational state is indicative of a load on a vehicle powertrain.
Point 14. A method according to any preceding point, wherein the operational state is indicative of a load on a source of motive power for propelling the vehicle.
Point 15. A method according to any preceding point, wherein the operational state is indicative of a current torque provided by a power source.
Point 16. A method according to any preceding point, wherein the operational state is indicative of the extent of a current torque provided by a power source relative to a maximum available power source torque at the current power source speed.
Point 17. A method according to any preceding point, wherein the operational state is indicative of the extent of a current torque provided by a power source relative to a totally maximum power source torque.
Point 18. A method according to any preceding point, wherein the operational state is indicative of a current speed of a power source.
Point 19. A method according to any preceding point, wherein the operational state is indicative of a load of an electric machine.
Point 20. A method according to any preceding point, wherein the vehicle comprises a hybrid powertrain, comprising the step of detecting at least one operational parameter of the hybrid powertrain indicative of said operational state.
Point 21. A system for providing feedback to a vehicle operator regarding an operational state of a vehicle power transmission system in operation, comprising means for detecting at least one operational parameter indicative of said operational state, and means for providing an audio feedback signal to the operator in response to a magnitude of the detected operational parameter.
Point 22. A system according to point 21, comprising means for introducing the audio signal into an operator compartment of the vehicle.
Point 23. A system according to point 21 or 22, wherein the operational state is indicative of a load on a power source.
Point 24. A system according to any one of points 21-23, wherein the operational state is indicative of a load on a vehicle powertrain.
Point 25. A system according to any one of points 21-24, wherein the operational state is indicative of a load on a vehicle hydraulic system.
Point 26. A system according to any one of points 21-25, wherein the operational state is indicative of a load of an electric machine.
Point 27. A system according to any one of points 21-26, wherein the vehicle comprises a hybrid powertrain and the operational state is indicative of the hybrid powertrain in operation.
Point 28. A work machine comprising the system according to any one of points 21-27.
Point 29. A work machine according to point 28 comprising a forward frame, a rear frame and an articulation joint connecting the forward frame to the rear frame, which allows pivoting the frames relative to one another about a vertical axis for steering the machine.
Point 30. A work machine according to point 28 or 29, wherein the work machine constitutes a wheel loader.
Point 31. A computer program comprising computer program segments for implementing the method as pointed in any one of points 1-20 when the program is run on a computer.
Point 32. A computer program product comprising computer program segments stored on a computer-readable means for implementing the method as pointed in any one of points 1-20 when the program is run on a computer.

## Claims

1. A method for providing feedback to a vehicle operator regarding an operational state of a vehicle power transmission system in operation, comprising the steps of detecting at least one operational parameter indicative of said operational state, and providing an audio feedback signal to the operator in response to a magnitude of the detected operational parameter, wherein the operational state is indicative of a load on a vehicle hydraulic system (214).

2. The method according to claim 1, wherein the operational state is indicative of the current pump pressure and pump flow or displacement of a pump (213; 315;316;317) of said vehicle hydraulic system (214).

3. The method according to claim 2, wherein the operational state is indicative of the extent of current pump pressure relative to a totally maximum pump pressure.

4. The method according to any one of claims 1 to 3, wherein the operational state is indicative of the extent of current pump pressure relative to a maximum available pump pressure at a current power source speed.

5. A method according to claim 1, wherein said operational parameter is indicative of a load of at least an electric machine (318,319,320) in said vehicle hydraulic system (214).

6. A method according to any preceding claim, comprising the step of introducing the audio signal into an operator compartment of the vehicle.

7. A method according to any preceding claim, comprising the step of varying the audio signal in response to any detected variations in the magnitude of the operational parameter.

8. A system for providing feedback to a vehicle operator regarding an operational state of a vehicle power transmission system in operation, comprising means for detecting at least one operational parameter indicative of said operational state, and means for providing an audio feedback signal to the operator in response to a magnitude of the detected operational parameter, wherein the operational state is indicative of a load on a vehicle hydraulic system (214).

9. The system according to claim 8, wherein the operational state is indicative of the current pump pressure and pump flow or displacement of a pump (213;215;315;316;317) of said vehicle hydraulic system (214).

10. The method according to claim 9, wherein the operational state is indicative of the extent of current pump pressure relative to a totally maximum pump pressure.

11. The method according to any one of claims 8 - 10, wherein the operational state is indicative of the extent of current pump pressure relative to a maximum available pump pressure at a current power source speed.

12. A system according to claim 8, wherein the operational state is indicative of a load of an electric machine (318,319,320) in said vehicle hydraulic system (214).

13. A system according to any one of claims 8 - 12, comprising means (224) for introducing the audio signal into an operator compartment of the vehicle.

14. A work machine comprising the system according to any one of claims 8 - 13.

15. A computer program comprising computer program segments for implementing the method as claimed in any one of claims 1-7 when the program is run on a computer.

16. A computer program product comprising computer program segments stored on a computer-readable means for implementing the method as claimed in any one of claims 1-7 when the program is run on a computer.
